# EUROPEAN PATENT APPLICATION

(11) **EP 1 973 022 A2**
(43) Date of publication of application: **24.09.2008**
(21) Application number: 08103730.1
(22) Date of filing: 25.04.2008
(51) Int. Cl.: G05B 23/02, B25J 9/16

(54) **A method for accessing statistical analysis data on industrial devices**

(71) Applicant: ABB AS, 1396 Billingstad (NO)
(72) Inventor: Landsnes, Øyvind, 4517 Mandal (NO); Espedal, Egil, 4034 Stavanger (NO)
(74) Representative: Dahlstrand, Björn

(57) **Abstract**

A method for accessing statistical analysis data on industrial devices of an industrial production line, wherein the method comprises:
- integrating statistical analysis tools into the industrial devices,
- generating statistical data using the integrated statistical analysis tools on the devices,
- presenting the statistical analysis data on devices, resulting in access to the analyzed statistical data on the devices.

## Description

### FIELD OF THE INVENTION

The present invention relates to a method for accessing statistical analysis data on industrial devices, wherein the method comprises integrating statistical analysis tools into the industrial devices, generating statistical data using the integrated statistical analysis tools on the devices, presenting the statistical analysis data on devices, resulting in access to the analyzed statistical data on the devices. Examples of the industrial devices are robot controllers, motors, pumps and valves.

### PRIOR ART

An industrial production line system normally comprises a number of industrial devices and a number of running processes. Each such device may cause a production stop at any time. Therefore, it is of great help for engineers to get indication of the potential problem by analyzing data coming from the devices, for example by using Pareto charts. However, today such analyzed statistical data is either generated manually on an off-line PC, or processed in a large, central system that is not generally available to a user. Manual generation on an off-line PC is very time-consuming, and therefore it is not often done, even if it could help prevent problems and production stops in the future.

### OBJECTS AND SUMMARY OF THE INVENTION

A primary object of the present invention is to provide a method for accessing statistical data on industrial devices of an industrial production line.

This object is achieved by a method as defined in claim 1.
- integrating statistical analysis tools into the industrial devices,
- generating statistical data using the integrated statistical analysis tools on the devices,
- presenting the statistical analysis data on devices, resulting in access to the analyzed statistical data on the devices.

The method according to the invention results in easy access to the analyzed statistical data. Due to the fact that analyzed statistical data is generated and presented on the devices, the engineers can access the data whenever they want. Thus, the method according to the invention is of great help for the engineers to detect the potential problems and to increase up-time of the system and optimize performance.

According to an embodiment of the invention, the industrial production line comprises a PC and one or more devices, all of them being connected to a local network, wherein the method comprises storing data logs on the devices, transferring the data log from the devices to the PC, generating statistical data using the integrated statistical analysis tools on the PC, presenting statistical differences between the devices on the PC according to a selected filter criterion.

In an embodiment of the invention, the industrial devices are robots; each robot has a control unit (robot controller) with a display unit that can be used to present information to users who can be service and maintenance engineers of the system. Each robot controller has its own data log storage to which the other components of a robot controller can send messages, or event data such as errors or warnings, for example. The robot controllers may be connected to a PC via a local network, which enables the PC to retrieve a copy of the events from the robot controllers. Statistical analysis tools are integrated into the controllers, or/and the PC, which generate statistical analysis data on the controllers or/and the PC, and therefore provide easy access to the generated statistical analysis data according to a selected filter criterion. Using a PC with the access to robot controllers has the additional advantage of being able to present statistical differences between the robot controllers.

### BRIEF DESCRIPTION OF THE DRAWINGS

The invention will now be explained more closely by the description of different embodiments of the invention and with reference to the appended figures.
- Fig. 1: shows an industrial system according to an embodiment of the invention.
- Fig. 2: shows an example of how different statistical diagrams are generated according to selected criteria.
- Fig. 3: shows an example of a generated statistical diagram, namely a Pareto chart.

### DETAILED DESCRIPTION OF PREFERRED EMBODIMENTS OF THE INVENTION

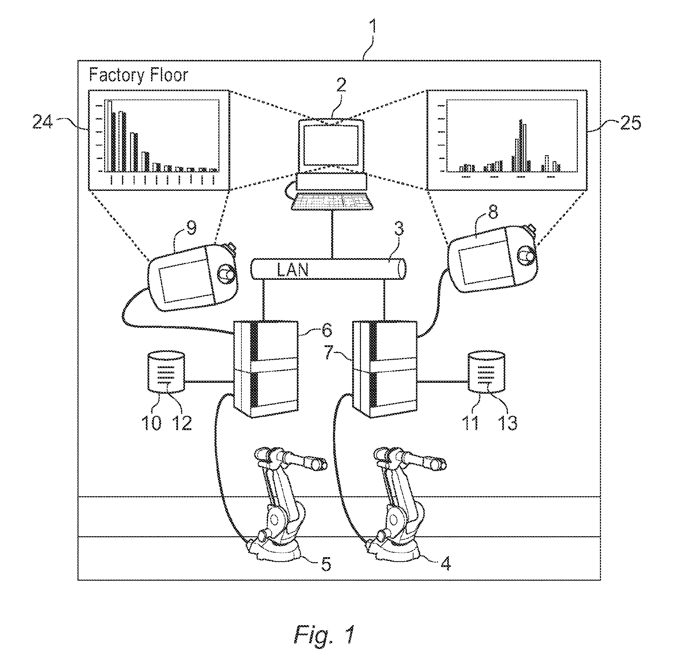

Fig. 1 shows an example of a robotized factory floor 1 comprising two industrial robots 4, 5 and a PC 2. Each of robots 4, 5 is connected to a control unit, or robot controller 6, 7. Each of robot controllers 6, 7 has a teach pendant unit 8, 9. The robots 4, 5 and the PC 2 are connected to a local network 3. Further, each of the robot controllers 6, 7 has its own data log storage, or event log 10, 11. Data log 12 or 13 is stored on the data log storage 10 or 11, respectively. Furthermore, a data log 12 or 13 can be retrieved by the PC 2 via the local network 3.

The fundamental idea is to integrate statistical analysis tools into the industrial devices, in this example, robot controllers 6, 7 to be able to generate the statistical data 24, 25 on the controllers 6, 7. Thus, a statistic result can be presented on one of teach pendant units 8, 9 or a PC 2 whenever it is desired.

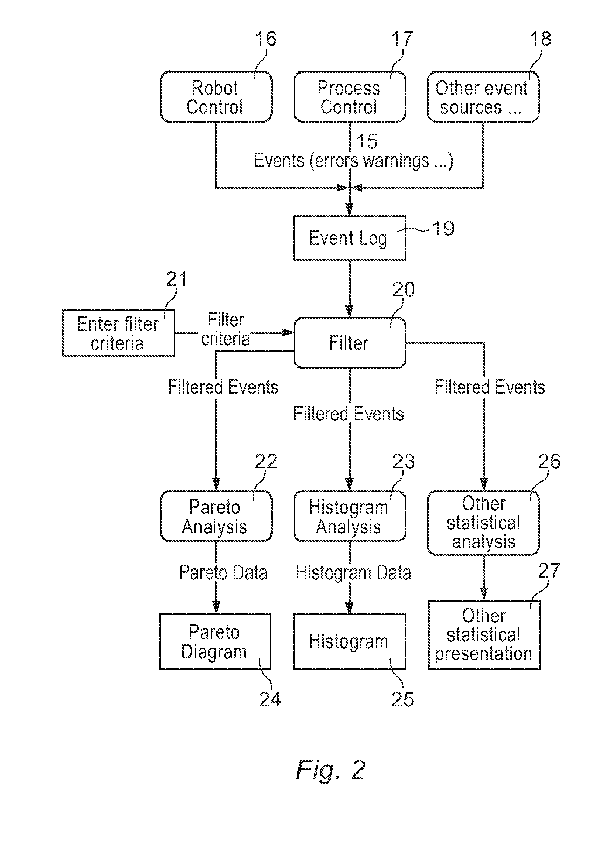

Fig. 2 shows an example of a data flow diagram for generating statistic analysis. A control unit, in an example of the invention, comprises various system components: a robot control 16, a process control 17, and other components 18. Each such a component can be the source of events. Each event 15 is sent to the event log 19.

To generate desired data, a user or an operator selects filter criteria 21 and enters them to the filter 20. According to the selected criteria, the filtered events are processed and analyzed by the integrated analysis tools, either a Pareto analysis tool 22 or a Histogram analysis tool 23, or some other tools 26. As a result, corresponding diagrams 24, 25 and 27 are generated for the filtered events according to the selected criteria and are presented to the user. Of course, by integrating other statistics analysis tools, desired results can be also generated and presented to the user/operator.

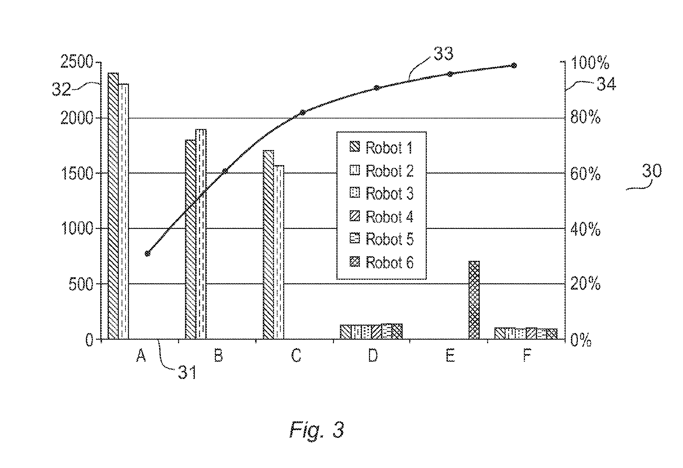

Fig. 3 shows an example of a Pareto chart 30. The x-axis is used to present event type 31. Type A, Type B, Type C, Type D, Type E and Type F are examples of possible event types. Y-axis is used to present the number of occurrences 32. In this example the occurrences can be in a range of zero to 2500 times. The curve 33 presents an accumulated number of events as a percentage of all the events. The percentage scale 34 is shown on the right side of the Pareto chart. To make a Pareto analysis of the event log, the number of times each event appears in the log is counted, the event is then sorted in descending order of occurrence, and is displayed the top *N* items. In this example, the top 6 robots are presented. In order to be useful, it must be possible to make the analysis on a selected subset of events. Typical selection criteria are:
• Time interval
   It must be possible to limit the analysis to a specific time interval. A resolution of a time frame is selected according to the type of the applications. Thus, the user needs to specify a start date and an end date.
• Severity
   It must be possible to limit the analysis to include one or more severity levels only. For example, the user selects error and warning messages, but not informational messages.
• Source
   It must be possible to limit the analysis to a selected subset of message sources, for example, one specific robot, two of the robots in a cell, all the robots and the programmable logic controller (PLC) in a cell.
• Message Groups or Ranges
   The messages are organized and codified. For example, system messages are in the *2nnnn* range, while paint messages are in the *13nnnn* range, where *nnnn* is four digits. Preferably, message groups and ranges limit the analysis to a selection of message groups or ranges.
**·** Exclude Selected Messages
   In some cases, specific messages occur many times in the log, but are always a consequence of one or more other messages. Such messages are not meaningful in a Pareto analysis; hence it should be possible to exclude such messages from the report.

Thanks to the fact that a PC 2 is connected to the local network 3, as shown in Fig. 1, statistical differences between two robot controllers 6 and 7 can be presented on PC 2 since it can access data on the robot controller 6 and 7.

Fig. 3 also shows an example of the detailed view of a Pareto analysis if several data sources are selected. The detailed view shows the contribution by each source to the total, while the summary view shows only the totals.

A detailed view as shown in Fig. 3 has the additional advantage of revealing differences between event sources. For example, it is easy to see that the three most frequently occurring events originate from only two specific paint robots, Robot 1 and Robot 2. This may draw an operator's attention. He can make a specific check on the robots 1 and 2.

## Claims

1. A method for accessing statistical analysis data on industrial devices of an industrial production line, wherein the method comprises:
- integrating statistical analysis tools into the industrial devices,
- generating statistical data using the integrated statistical analysis tools on the devices,
- presenting the statistical analysis data on devices, resulting in access to the analyzed statistical data on the devices.

2. A method according to claim 1, said industrial production line comprising a PC and one or more devices, all of them being connected to a local network, wherein the method comprises,
- storing data logs on the devices,
- transferring the data logs from the devices to the PC,
- generating statistical data using the integrated statistical analysis tools on the PC,
- presenting statistical differences between the devices on the PC according to a selected filter criterion.

3. A method according to claim 2, wherein said industrial devices are robots, each robot having a control unit with a display unit.
